# EUROPEAN PATENT APPLICATION

(11) **EP 2 654 374 A1**
(43) Date of publication of application: **23.10.2013**
(21) Application number: 12165101.2
(22) Date of filing: 23.04.2012
(51) Int. Cl.: H05B 33/08, H02M 7/06

(54) **Rectifier circuit with capacitors for feeding LED**

(30) Priority: 20.04.2012 US 201261635900 P
(71) Applicant: Koninklijke Philips N.V., 5656 AE Eindhoven (NL)
(72) Inventor: The designation of the inventor has not yet been filed

(57) **Abstract**

Rectifier circuits (1) comprise diode circuits coupled to input terminals (2, 3) for receiving first voltage signals from first circuits (21) such as voltage-to-voltage-converters. The diode circuits comprise diodes (11-14) for rectifying the first voltage signals and are coupled to output terminals (4, 5) for supplying second voltage signals. First capacitors (15) are coupled to the output terminals (4, 5) for buffering the second voltage signals and for offering buffered second voltage signals to second circuits (22) such as voltage-to-current-converts for feeding light circuits (30) comprising one or more light emitting diodes. Second capacitors (16, 17) coupled in parallel to one of the diodes (11-14) increase amplitudes of the buffered second voltage signals to improve performances of the first and second circuits (21, 22) and the light circuits (30). The second capacitors (16, 17) offer additional controlling options with respect to inrush current signals flowing through the input terminals (2, 3) and with respect to time-intervals necessary for charging the first capacitors (15).

## Description

### FIELD OF THE INVENTION

The invention relates to a rectifier circuit. The invention further relates to first and second apparatuses each comprising the rectifier circuit, and to light devices comprising the rectifier circuit, the first apparatus and/or the second apparatus.

Examples of such a rectifier circuit are diode bridges. Examples of such a first apparatus are voltage-to-voltage-converters. Examples of such a second apparatus are voltage-to-voltage-converters and voltage-to-current-converters. Examples of such a light device are lamps and parts thereof comprising at least one light emitting diode.

### BACKGROUND OF THE INVENTION

US 8,004,210 B2 relates to a light emitting diode replacement for low voltage lamps and discloses a rectifier circuit in the form of a diode bridge.

Usually, a voltage-to-voltage-converter is used for feeding a low voltage lamp, such as a halogen lamp, via a rectifier circuit. When replacing the low voltage lamp by a light circuit comprising one or more light emitting diodes, without replacing the voltage-to-voltage-converter, problems may occur, owing to the fact that the light circuit may show a behavior different from a behavior of the low voltage lamp. The one or more light emitting diodes have a voltage-current-behavior different from a voltage-current-behavior of the low voltage lamp. And a voltage-to-current-converter necessary for driving the one or more light emitting diodes may show a switching behavior etc.

### SUMMARY OF THE INVENTION

It is an object of the invention to provide an improved rectifier circuit. Further objects of the invention are to provide first and second apparatuses and light devices.

According to a first aspect, a rectifier circuit is provided comprising
- a diode circuit coupled to input terminals for receiving a first voltage signal from a first circuit and comprising diodes for rectifying the first voltage signal and coupled to output terminals for supplying a second voltage signal,
- a first capacitor coupled to the output terminals for buffering the second voltage signal and for offering a buffered second voltage signal to a second circuit, and
- a second capacitor coupled in parallel to one of the diodes for increasing an amplitude of the buffered second voltage signal.

A diode circuit rectifies a first voltage signal coming from a first circuit, such as for example a voltage-to-voltage-converter, and provides a second voltage signal to a first capacitor. The first capacitor buffers the second voltage signal and offers a buffered second voltage signal to a second circuit, such as for example a voltage-to-current-converter, for feeding a light circuit comprising at least one light emitting diode. By having introduced a second capacitor, that is coupled in parallel to (exactly) one of the diodes of the diode circuit, an amplitude of the buffered second voltage signal is increased. The reason for this is that the second capacitor, during a first part of a switching cycle of the first voltage signal, is charged with energy, and that the second capacitor, during a second part of the switching cycle of the first voltage signal, tries to hold this energy. As a result, (an average value of) an amplitude of a voltage signal present across the second capacitor is to be added to (an instantaneous value of) an amplitude of the first voltage signal, and the buffered second voltage signal present across the first capacitor will get a larger amplitude. This larger amplitude compensates for problems, such as a flickering light output, owing to the fact that more energy is available for driving the light circuit comprising at least one light emitting diode.

The rectifier circuit is further advantageous in that the second capacitor will offer additional controlling options, for example with respect to inrush current signals flowing through the input terminals and with respect to time-intervals necessary for charging the first capacitor.

Each diode may be a real diode or a zener diode or may be (a part of) a transistor or may be created otherwise as long as the creation will show a diode behavior. The diode circuit may be a diode bridge or may be created otherwise as long as the creation will show a rectifier behavior. The first voltage signal is for example an alternating-current (AC) voltage signal, and the second voltage signal is for example a direct-current (DC) voltage signal.

An embodiment of the rectifier circuit is defined by a first input terminal of the input terminals being coupled via a first diode to a first output terminal of the output terminals and via a second diode to a second output terminal of the output terminals, and a second input terminal of the input terminals being coupled via a third diode to the first output terminal and via a fourth diode to the second output terminal, said one of the diodes being the first diode. This diode circuit is a diode bridge.

An embodiment of the rectifier circuit is defined by further comprising
- a third capacitor coupled in parallel to one other one of the diodes for further increasing an amplitude of the buffered second voltage signal. The third capacitor in parallel to the (exactly) one other one of the diodes will further increase the amplitude of the buffered second voltage signal.

An embodiment of the rectifier circuit is defined by a first input terminal of the input terminals being coupled via a first diode to a first output terminal of the output terminals and via a second diode to a second output terminal of the output terminals, and a second input terminal of the input terminals being coupled via a third diode to the first output terminal and via a fourth diode to the second output terminal, said one of the diodes being the first diode, and said one other one of the diodes being the second diode. This diode circuit is a diode bridge.

An embodiment of the rectifier circuit is defined by a value of the second capacitor being equal to or smaller than a maximum value for limiting an amplitude of an inrush current signal flowing through the input terminals. Limiting amplitudes of inrush current signals reduces stress on components.

An embodiment of the rectifier circuit is defined by a value of the second capacitor being equal to or larger than a minimum value for limiting a duration of a time-interval necessary for charging the first capacitor. Limiting durations of time-intervals necessary for charging capacitors reduces start-up times.

According to a second aspect, a first apparatus is provided comprising the rectifier circuit as defined above and further comprising the first circuit.

An embodiment of the first apparatus is defined by the first circuit being a first converter for converting an input AC voltage signal into an output AC voltage signal, the output AC voltage signal having a smaller amplitude than the input AC voltage signal, and the output AC voltage signal corresponding with the first voltage signal, the first converter comprising a magnetic transformer or an electronic transformer or a fluorescent ballast. This is a voltage-to-voltage-converter. A magnetic transformer is an ordinary transformer that for example comprises a core with windings. An electronic transformer is for example a switched-mode-power-supply. A fluorescent ballast is required to feed a fluorescent lamp, which fluorescent lamp may (need to) be replaced by another kind of lamp, such as one or more light emitting diodes, while keeping the fluorescent ballast (retro-fit).

An embodiment of the first apparatus is defined by the first apparatus further comprising a third circuit for improving a compatibility of the first circuit. The third circuit for example comprises a serial connection of a capacitor and a resistor located between the first circuit and the rectifier circuit and coupled to output terminals of the first circuit. Alternatively, the third circuit may form part of the first circuit or of the rectifier circuit.

According to a third aspect, a second apparatus is provided comprising the rectifier circuit as defined above and further comprising the second circuit.

An embodiment of the second apparatus is defined by the second circuit being a second converter for converting an input DC voltage signal into an output DC signal, and the input DC voltage signal corresponding with the buffered second voltage signal. In case the output DC signal is an output DC voltage signal, the second apparatus is a voltage-to-voltage-converter, for example for feeding an incandescent lamp.

An embodiment of the second apparatus is defined by the output DC signal being an output DC current signal destined for a light circuit comprising at least one light emitting diode, the second converter being designed to measure an amplitude of the output DC current signal for controlling purposes. This second apparatus is a voltage-to-current-converter. The light circuit comprises one or more light emitting diodes of whatever kind and in whatever combination.

According to a fourth aspect, a light device is provided comprising the rectifier circuit as defined above and further comprising a light circuit that comprises at least one light emitting diode.

According to a fifth aspect, a light device is provided comprising the first apparatus as defined above and further comprising a light circuit that comprises at least one light emitting diode.

According to a sixth aspect, a light device is provided comprising the second apparatus as defined above and further comprising a light circuit that comprises at least one light emitting diode.

An insight could be that a light circuit comprising one or more light emitting diodes may show a behavior different from a behavior of a low voltage lamp such as a halogen lamp. A basic idea could be that a boost capacitor (second capacitor) coupled in parallel to one of the diodes of a diode circuit may increase an amplitude of a voltage signal buffered in a buffer capacitor (first capacitor).

A problem to provide an improved rectifier has been solved. A further advantage could be that an inrush current signal coming from the first circuit may be limited by the boost capacitor (second capacitor) and that a solution of adding a boost capacitor is more low cost and more robust, compared to another solution that adds a power modulation stage between the diode circuit and the buffer capacitor (first capacitor).

These and other aspects of the invention will be apparent from and elucidated with reference to the embodiments described hereinafter.

### BRIEF DESCRIPTION OF THE DRAWINGS

In the drawings:
Fig. 1 shows an overview of circuits,
Fig. 2 shows an embodiment of a second circuit,
Fig. 3 shows a first embodiment of a rectifier circuit,
Fig. 4 shows a second embodiment of a rectifier circuit,
Fig. 5 shows prior art waveforms,
Fig. 6 shows improved waveforms, and
Fig. 7 shows an embodiment of a third circuit.

### DETAILED DESCRIPTION OF EMBODIMENTS

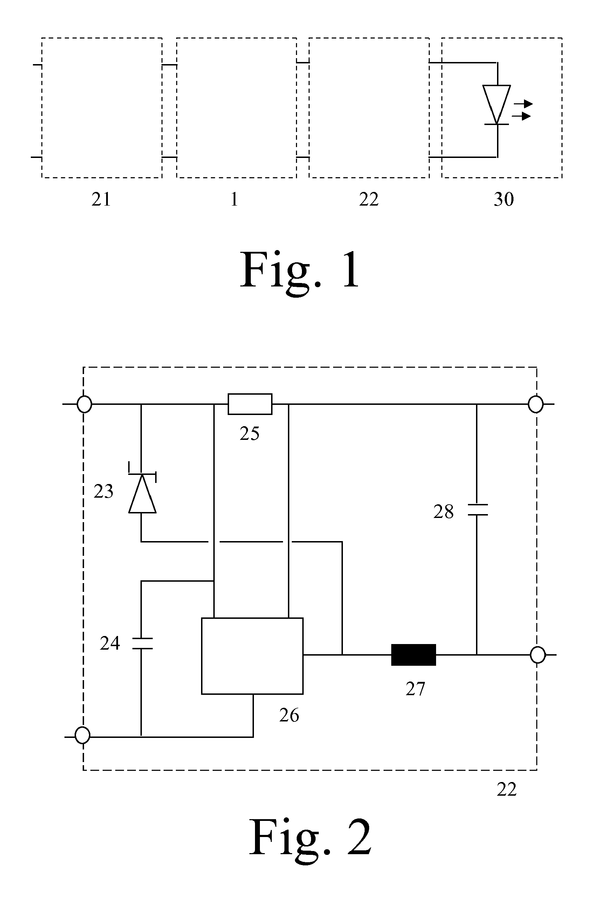

In the Fig. 1, an overview of circuits is shown. A first circuit 21 such as a voltage-to-voltage-converter such as a magnetic transformer or an electronic transformer, such as a switched-mode-power-supply, or a fluorescent ballast is coupled to a rectifier circuit 1. The rectifier circuit 1 is further coupled to a second circuit 22 such as a voltage-to-current-converter. The second circuit 22 is further coupled to a light circuit 30 comprising at least one light emitting diode of whatever kind, usually more than one light emitting diode in whatever combination. The second circuit 22 may alternatively be a voltage-to-voltage-converter.

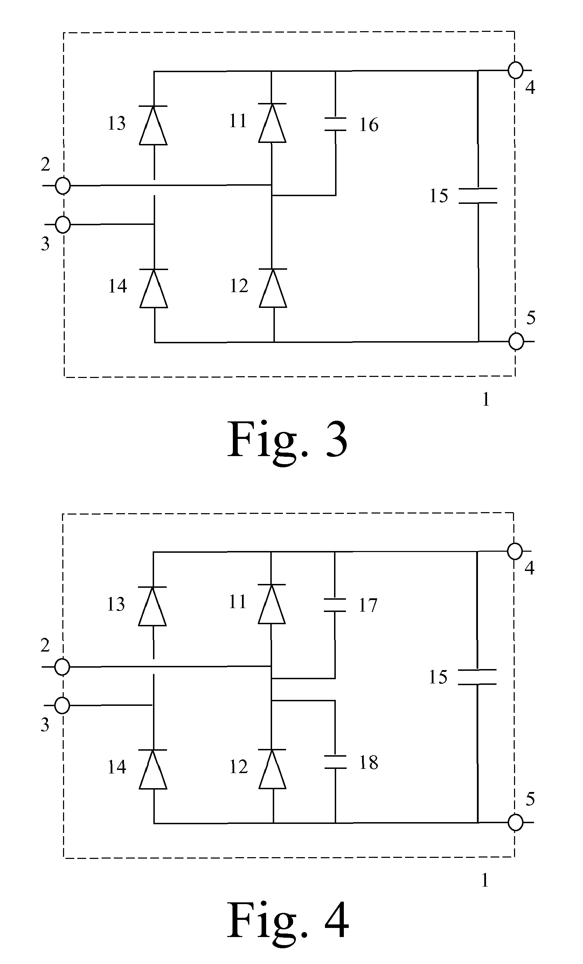

In the Fig. 2, an embodiment of a second circuit 22 is shown. A first input terminal is coupled to a normal input of a chip 26 and to a first side or a zener diode 23 and to a first side of a resistor 25 and to a first side of a capacitor 24. An other side of the resistor 25 is coupled to a first output terminal and to a sensing input of the chip 26. A second input terminal is coupled to a ground input of the chip 26 and to another side of the capacitor 24. Another side of the zener diode 23 is coupled to an output of the chip 26 and to one side of an inductor 27. Another side of the inductor 27 is coupled to a second output terminal and via a capacitor 28 to the first output terminal. This second circuit 22 is a voltage-to-current-converter. The chip 26 is a chip common in the art. The first and second input terminals of the second circuit 22 are to be coupled to output terminals of the rectifier circuit 1 shown in the Fig. 3 and 4. The first and second output terminals of the second circuit 22 are to be coupled to terminals of the light circuit 30. Many alternatives to this second circuit 22 will be available to a person skilled in the art.

In the Fig. 3, a first embodiment of a rectifier circuit 1 is shown. The rectifier circuit 1 comprises a diode circuit coupled to input terminals 2, 3 of the rectifier circuit 1 for receiving a first voltage signal from the first circuit 21. The diode circuit comprises diodes 11-14 for rectifying the first voltage signal and is coupled to output terminals 4, 5 of the rectifier circuit 1 for supplying a second voltage signal. The rectifier circuit 1 further comprises a first capacitor 15 coupled to the output terminals 4, 5 for buffering the second voltage signal and for offering a buffered second voltage signal to the second circuit 22. The rectifier circuit 1 yet further comprises a second capacitor 16 coupled in parallel to (exactly) one of the diodes 11-14 for increasing an amplitude of the buffered second voltage signal.

Preferably, a first input terminal 2 of the input terminals 2, 3 is coupled via a first diode 11 to a first output terminal 4 of the output terminals 4, 5 and via a second diode 12 to a second output terminal 5 of the output terminals 4, 5. And a second input terminal 3 of the input terminals 2, 3 is coupled via a third diode 13 to the first output terminal 4 and via a fourth diode 14 to the second output terminal 5. Said one of the diodes 11-14 may for example be the first diode 11, but any other one of the diodes 12-14 will do fine too.

In the Fig. 4, a second embodiment of a rectifier circuit 1 is shown. This second embodiment only differs from the first embodiment shown in the Fig. 3 in that, in addition to the second capacitor 17 that is coupled in parallel to the first diode 11, there is a third capacitor 18 that is coupled in parallel to the second diode 12 for further increasing an amplitude of the buffered second voltage signal. Good results are achieved in case the respective capacitors 17 and 18 are coupled in parallel to the respective diodes 11 and 12 or vice versa, and in case the respective capacitors 17 and 18 are coupled in parallel to the respective diodes 13 and 14 or vice versa.

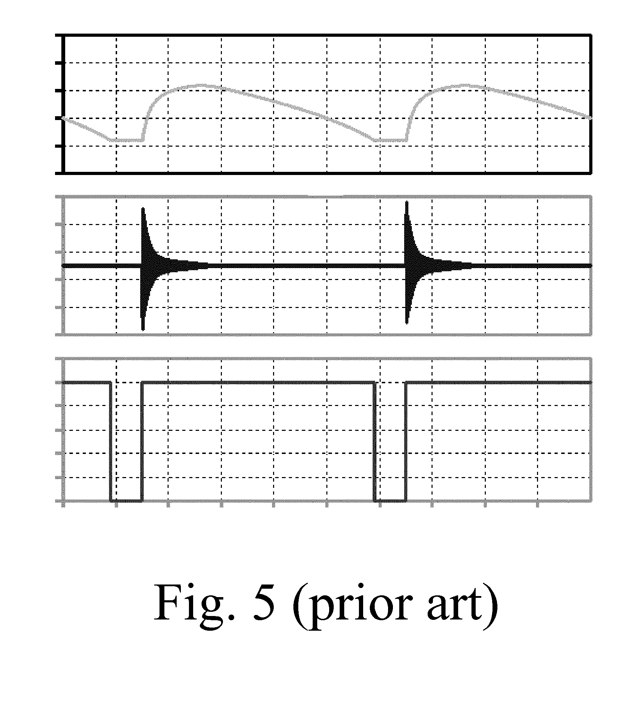

In the Fig. 5, prior art waveforms are shown. The upper graph shows a buffered second voltage signal across the first capacitor 15 versus time. The next graph shows an input current signal flowing through the input terminals 2, 3 versus time. The lower graph shows an output current signal flowing through the light circuit 30 versus time. Clearly, the buffered second voltage signal has a relatively low average value and the input current signal has relatively short and high peaks and the output current signal is interrupted when the buffered second voltage signal is of a too low value.

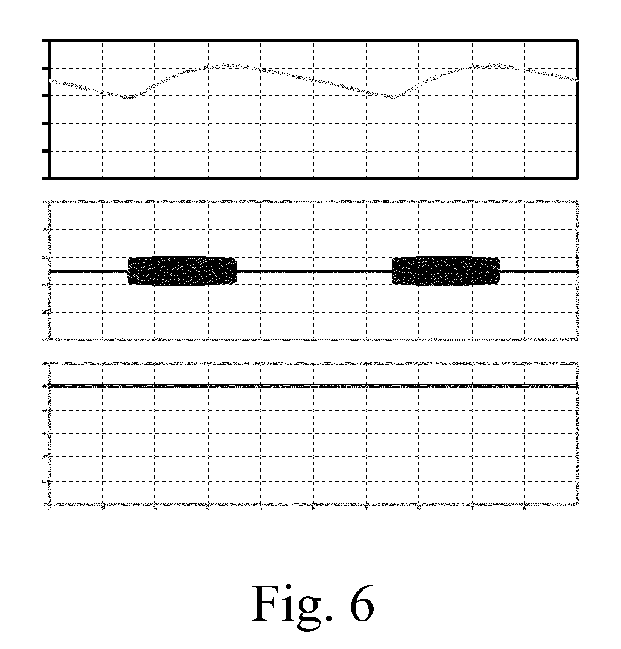

In the Fig. 6, improved waveforms are shown, for the rectifier circuit as shown in the Fig. 3. Again, the upper graph shows a buffered second voltage signal across the first capacitor 15 versus time. The next graph shows an input current signal flowing through the input terminals 2, 3 versus time. The lower graph shows an output current signal flowing through the light circuit 30 versus time. Clearly, the buffered second voltage signal has a relatively high average value compared to the prior art buffered second voltage signal and the input current signal is more smoothed compared to the prior art input current signal and the output current signal is no longer interrupted, and these are great advantages.

The first capacitor 15 may have a value of 470 µF and the second and third capacitors 16-18 may each have a value of 22 nF but other values are not to be excluded and many other values will do fine too.

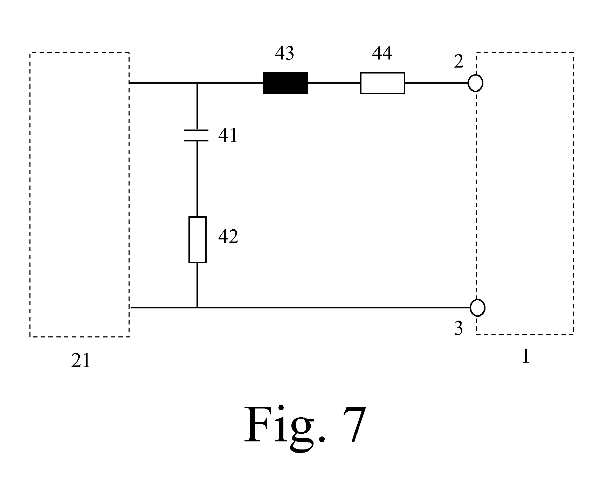

In the Fig. 7, an embodiment of a third circuit 41-42 for improving a compatibility of the first circuit 21 is shown. The third circuit 41-42 for example comprises a serial connection of a capacitor 41 and a resistor 42 located between the first circuit 21 and the rectifier circuit 1 and coupled to output terminals of the first circuit 21 (and to the input terminals 2, 3 of the rectifier circuit 1). Alternatively, the third circuit 41-42 may form part of the first circuit 21 or of the rectifier circuit 1. Possibly, the third circuit 41-44 may be extended with an inductor 43 and/or a resistor 44 as shown for coupling one side of the serial connection to the input terminal 2, with the other side of the serial connection being coupled to the input terminal 3 more directly. Further alternatively, a part of the third circuit 41-44 may be located inside the first circuit 21 and another part of the third circuit 41-44 may be located inside the rectifier circuit 1 etc.

Compatibility is improved owing to the fact that (a) the third circuit 41-42 may change a phase of an output current signal of the first circuit 21 (self-oscillating transformers require two conditions in order to start up and keep oscillating, namely a particular phase and a particular amplitude of this output current signal) and/or (b) the third circuit 41-42 may affect the amplitude of this output current signal (for high frequencies the third circuit 41-42 is a low impedance path which will load the first circuit 21 such that the amplitude of the output current signal will be larger and an oscillation condition is improved) and/or (c) the third circuit 41-42 may provide a low impedance path during the switching of the first circuit 21 (at the edges) here for example in the form of an electronic transformer. The third circuit 41-42 may improve the compatibility of the first circuit 21 independently from a presence of the capacitors 16-18. To improve a compatibility of a particular first circuit 21, the capacitor 41 has got a value of 4.7 nF and the resistor 42 has got a value of 10 Ohm (for the inductor 43 having a value of 2.2 µH), but other values are not to be excluded, and for other kinds of first circuits 21 other values may be needed.

Summarizing, rectifier circuits 1 comprise diode circuits coupled to input terminals 2, 3 for receiving first voltage signals from first circuits 21 such as voltage-to-voltage-converters. The diode circuits comprise diodes 11-14 for rectifying the first voltage signals and are coupled to output terminals 4, 5 for supplying second voltage signals. First capacitors 15 are coupled to the output terminals 4, 5 for buffering the second voltage signals and for offering buffered second voltage signals to second circuits 22 such as voltage-to-current-converts for feeding light circuits 30 comprising one or more light emitting diodes. Second capacitors 16, 17 coupled in parallel to one of the diodes 11-14 increase amplitudes of the buffered second voltage signals to improve performances of the first and second circuits 21, 22 and the light circuits 30. The second capacitors 16, 17 offer additional controlling options with respect to inrush current signals flowing through the input terminals 2, 3 and with respect to time-intervals necessary for charging the first capacitors 15.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A rectifier circuit (1) comprising
- a diode circuit coupled to input terminals (2, 3) for receiving a first voltage signal from a first circuit (21) and comprising diodes (11-14) for rectifying the first voltage signal and coupled to output terminals (4, 5) for supplying a second voltage signal,
- a first capacitor (15) coupled to the output terminals (4, 5) for buffering the second voltage signal and for offering a buffered second voltage signal to a second circuit (22), and
- a second capacitor (16, 17) coupled in parallel to one of the diodes (11-14) for increasing an amplitude of the buffered second voltage signal.

2. The rectifier circuit (1) as defined in claim 1, a first input terminal (2) of the input terminals (2, 3) being coupled via a first diode (11) to a first output terminal (4) of the output terminals (4, 5) and via a second diode (12) to a second output terminal (5) of the output terminals (4, 5), and a second input terminal (3) of the input terminals (2, 3) being coupled via a third diode (13) to the first output terminal (4) and via a fourth diode (14) to the second output terminal (5), said one of the diodes (11-14) being the first diode (11).

3. The rectifier circuit (1) as defined in claim 1, further comprising
- a third capacitor (18) coupled in parallel to one other one of the diodes (11-14) for further increasing an amplitude of the buffered second voltage signal.

4. The rectifier circuit (1) as defined in claim 3, a first input terminal (2) of the input terminals (2, 3) being coupled via a first diode (11) to a first output terminal (4) of the output terminals (4, 5) and via a second diode (12) to a second output terminal (5) of the output terminals (4, 5), and a second input terminal (3) of the input terminals (2, 3) being coupled via a third diode (13) to the first output terminal (4) and via a fourth diode (14) to the second output terminal (5), said one of the diodes (11-14) being the first diode (11), and said one other one of the diodes (11-14) being the second diode (12).

5. The rectifier circuit (1) as defined in claim 1, a value of the second capacitor (16, 17) being equal to or smaller than a maximum value for limiting an amplitude of an inrush current signal flowing through the input terminals (2, 3).

6. The rectifier circuit (1) as defined in claim 1, a value of the second capacitor (16, 17) being equal to or larger than a minimum value for limiting a duration of a time-interval necessary for charging the first capacitor (15).

7. A first apparatus comprising the rectifier circuit (1) as defined in claim 1 and further comprising the first circuit (21).

8. The first apparatus as defined in claim 7, the first circuit (21) being a first converter for converting an input AC voltage signal into an output AC voltage signal, the output AC voltage signal having a smaller amplitude than the input AC voltage signal, and the output AC voltage signal corresponding with the first voltage signal, the first converter comprising a magnetic transformer or an electronic transformer or a fluorescent ballast.

9. The first apparatus as defined in claim 7, the first apparatus further comprising a third circuit (41-42) for improving a compatibility of the first circuit (21).

10. A second apparatus comprising the rectifier circuit (1) as defined in claim 1 and further comprising the second circuit (22).

11. The second apparatus as defined in claim 10, the second circuit (22) being a second converter for converting an input DC voltage signal into an output DC signal, and the input DC voltage signal corresponding with the buffered second voltage signal.

12. The second apparatus as defined in claim 11, the output DC signal being an output DC current signal destined for a light circuit (30) comprising at least one light emitting diode, the second converter being designed to measure an amplitude of the output DC current signal for controlling purposes.

13. A light device comprising the rectifier circuit (1) as defined in claim 1 and further comprising a light circuit (30) that comprises at least one light emitting diode.

14. A light device comprising the first apparatus as defined in claim 7 and further comprising a light circuit (30) that comprises at least one light emitting diode.

15. A light device comprising the second apparatus as defined in claim 10 and further comprising a light circuit (30) that comprises at least one light emitting diode.
